(19) Europäisches Patentamt
European Patent Office
Office européen des brevets

(11) **EP 3 363 841 B1**

(12) **EUROPÄISCHE PATENTSCHRIFT**

(45) Veröffentlichungstag und Bekanntmachung des Hinweises auf die Patenterteilung:
**29.11.2023   Patentblatt 2023/48**

(21) Anmeldenummer: **17156629.2**

(22) Anmeldetag: **17.02.2017**

(51) Internationale Patentklassifikation (IPC):
*C08G 63/78* (2006.01)      *C08G 63/88* (2006.01)
*C08G 69/46* (2006.01)      *B29B 9/16* (2006.01)
*C08J 3/12* (2006.01)      *B01J 2/30* (2006.01)

(52) Gemeinsame Patentklassifikation (CPC):
**C08G 63/88; B29B 9/065; B29B 9/16; B29B 13/04;**
**C08G 63/785; C08G 69/46; C08J 3/124;**
**F26B 17/00; F26B 21/04;** B29B 13/065;
B29B 2009/165; B29K 2067/003; B29K 2067/006;
C08J 2367/02; F26B 2200/08

(54) **VERFAHREN UND VORRICHTUNG ZUR DIREKTKRISTALLISATION VON POLYKONDENSATEN**

METHOD AND DEVICE FOR DIRECT CRYSTALLISATION OF POLYCONDENSATES

PROCÉDÉ ET DISPOSITIF DE CRISTALLISATION DIRECTE DE POLYCONDENSATS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.08.2018   Patentblatt 2018/34**

(60) Teilanmeldung:
**23194658.3 / 4 257 629**

(73) Patentinhaber: **Polymetrix AG**
**9245 Oberbüren (CH)**

(72) Erfinder:
• **Christel, Andreas**
**9524 Zuzwil (CH)**
• **Culbert, Brent Allan**
**9500 Wil (CH)**

(74) Vertreter: **Hepp Wenger Ryffel AG**
**Friedtalweg 5**
**9500 Wil (CH)**

(56) Entgegenhaltungen:
**EP-A1- 2 712 881      WO-A1-2008/071023**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein Verfahren zur Direktkristallisation von Polykondensaten, insbesondere von Polyestern wie Polyethylenterephthalat (PET).

Die Herstellung bestimmter hochmolekularer Polymere, insbesondere von Polykondensaten wie Polyestern, ist über eine Schmelzpolykondensation oft nicht möglich, da wegen der damit einhergehenden zu hohen thermischen Belastung ein Produktabbau und eine inakzeptable Verunreinigung mit Nebenprodukten auftreten. Aus diesem Grund werden über eine Schmelzpolykondensation Prepolymere mit einem geringeren Molekulargewicht hergestellt. Die Prepolymere werden anschliessend in einer Festphasennachkondensation (SSP) auf das gewünschte Molekulargewicht angehoben. Diese Vorgehensweise ist aus dem Stand der Technik bekannt (z.B. Scheirs/Long (Hrsg.), Modern Polyesters, Wiley 2003, Kapitel 4, S. 143 ff.).

Für die SSP-Reaktion wird das aus der Schmelzpolykondensation erhaltene Prepolymer zu Granulat verarbeitet. Um ein Verkleben des Granulats unter den Bedingungen der SSP-Reaktion zu verhindern, wird das Granulat vor der SSP-Reaktion teilkristallisiert. Auch dies ist aus dem Stand der Technik bekannt (z.B. Scheirs/ Long (Hrsg.), Modern Polyesters, Wiley 2003, Kapitel 4, S. 158-164) .

Lässt sich das hochmolekulare Polykondensat mittels Schmelzpolykondensation herstellen, kann anschliessend trotzdem eine teilweise Kristallisation notwendig sein, um weitere Verarbeitungsschritte, wie eine Devolatilisierung, zu ermöglichen.

Üblicherweise wird das Polykondensat oder Polykondensat-Prepolymer nach seiner Formung zu Granulat abgekühlt und für die Kristallisation wieder aufgeheizt. Es sind aber aus dem Stand der Technik auch Verfahren bekannt, bei denen das Granulat direkt nach seiner Bildung in heissem Zustand ohne zwischenzeitliche Abkühlung der Kristallisationsstufe zugeführt wird. Derartige Verfahren werden als Direktkristallisation bezeichnet. In der DE 103 49 016 und der DE 10 2004 015 515 sind beispielsweise sogenannte Latentwärmekristallisationsverfahren beschrieben, bei welchem die Kristallisation ausschliesslich unter Ausnutzung der Eigenwärme des Granulats erfolgt. Diese Verfahren haben aber den Nachteil, dass sie die Anforderungen an eine flexibel einstellbare und homogene Austrittsqualität bezüglich Temperatur und Kristallisationsgrad nicht erfüllen können. Weiterhin nachteilig ist, dass sich im Anfangsbereich der Kristallisationszone häufig Agglomerate bilden, die sich nicht immer vollständig auflösen.

Bessere Ergebnisse lassen sich erzielen, wenn die Kristallisation der noch heissen Granulate unter zusätzlichem Erhitzen mittels eines heissen Prozessgases erfolgt. Dies ist beispielsweise in der US-3,544,525 allgemein vorgeschlagen, ohne dass diesem Dokument Einzelheiten zur Verfahrensführung entnehmbar sind. Wie nachstehend ausgeführt ist dieses Verfahren mit mehreren Nachteilen behaftet.

In der WO 2008/071023 ist ein Verfahren beschrieben, bei welchem noch heisses Granulat in einem Granulattrockner vom Kühlmedium getrennt und anschliessend in einen Kristallisator überführt wird, wo es unter bestimmten Bedingungen behandelt wird. Sowohl Granulattrockner als auch Kristallisator werden hierbei unter Luftatmosphäre betrieben. Verdampftes Kühlmedium kann mit Hilfe von Luft entfernt werden. Die Strömungsgeschwindigkeit des Behandlungsgases im Kristallisator muss über dem Lockerungspunkt des Polykondensats liegen, und die Polykondensatgranulate müssen im Kristallisator ein enges Verweilzeitspektrum aufweisen, um ein homogen kristallisiertes Polykondensatgranulat zu erhalten. Zum Erhalt eines engen Verweilzeitspektrums muss zumindest in Teilen des Kristallisators eine starke Verwirbelung vermieden werden. Diese spezifischen Verfahrensbedingungen sind einschränkend und daher nachteilig.

Nicht immer kann jedoch unter Luftatmosphäre kristallisiert werden, da es bei den hohen Kristallisationstemperaturen zu oxidativem Abbau kommen kann. Bei bestimmten Materialien beziehungsweise bestimmten Qualitätsanforderungen muss daher unter Inertgasatmosphäre kristallisiert werden.

In der vorstehend bereits erwähnten US-3,544,525 ist ein Verfahren beschrieben, bei welchem Polymerschmelze mittels einer Unterwassergranulation in ein Prepolymer-Granulat geformt wird. Das Granulat wird anschliessend in einer Entwässerungseinheit (Granulattrockner) getrocknet und in eine Kristallisationsapparatur überführt, wo es mit heissem Inertgas kristallisiert wird.

Dieses Verfahren weist verschiedene Nachteile auf. Neben einer nicht zufriedenstellenden Kontrolle und Homogenität der Kristallisation kommt es aufgrund der Ausgestaltung des Granulattrockners als geschlossenes System in diesem durch die verdampfende Kühlflüssigkeit (Wasser) zu einem Überdruck. Als Konsequenz wird das Wasser aus dem Granulattrockner in den Kristallisator gedrückt und in den sich anschliessenden SSP-Reaktor eingetragen. Obwohl das Prepolymer in der US-3,544,525 nach Durchlaufen des Granulattrockners als relativ trocken beschrieben wird, liegt im SSP-Reaktor dennoch ein hoher Feuchtigkeitsgehalt vor, welcher vom Prozessgas aufgenommen wird, das den SSP-Reaktor durchströmt. Vor der Rückführung des Prozessgases in den SSP-Reaktor muss dieses in zusätzlichen Einheiten (Kondensator und Trockner) aufwendig vom Wasser befreit werden. Alternativ kann das feuchte Prozessgas entsorgt und durch frisches trockenes Prozessgas ersetzt werden. Diese Variante ist kostspielig und daher nicht zufriedenstellend. Zudem führt der hohe Feuchtigkeitsgehalt im SSP-Reaktor zu einer Abkühlung des Granulats, da das Wasser am Granulat anhaftet und abgedampft werden muss. Es wird daher im SSP-Reaktor mehr Prozessgas zum Erreichen der gewünschten Reaktionstemperatur benötigt, was ökonomisch nachteilig ist.

Es war die Aufgabe der vorliegenden Erfindung, ein Verfahren zur Direktkristallisation von Polymer bereitzustellen, welche nicht die Nachteile aus dem Stand der Technik aufweisen.

Es wurde erfindungsgemäss überraschend gefunden, dass die Nachteile aus dem Stand der Technik überwunden werden können, wenn im Kristallisator die Kristallisation unter einer spezifischen Energiezufuhr von aussen erfolgt.

Die vorliegende Erfindung betrifft ein Verfahren zur kontinuierlichen Herstellung eines teilkristallinen Polykondensatgranulats, umfassend die Schritte:

a) Formen einer Polykondensatschmelze zu Granulat unter Zugabe eines flüssigen Kühlmediums, welches eine Temperatur unterhalb des Glasübergangspunkts (Tg) des Polykondensats aufweist, und Abkühlen auf eine mittlere Granulat-Temperatur innerhalb des Kristallisationstemperaturbereiches des Polykondensates, wobei das Abkühlen vor oder während oder nach dem Formen zu Granulat erfolgt;

b) Abtrennen des flüssigen Kühlmediums vom Granulat in einem ersten Behandlungsraum, wobei das Granulat nach Austritt aus dem ersten Behandlungsraum eine Temperatur $T_{GR}$ aufweist;

c) Kristallisieren des Granulats in einem zweiten Behandlungsraum,

dadurch gekennzeichnet, dass im zweiten Behandlungsraum die Bedingungen eines Wirbelbetts vorliegen und das Granulat im zweiten Behandlungsraum durch Energiezufuhr von aussen mittels eines Prozessgases erhitzt wird, wobei das Prozessgas eine Temperatur $T_{Gas}$ aufweist, die grösser ist als die Summe der Granulattemperatur $T_{GR}$ und der durch freigesetzte Kristallisationswärme im zweiten Behandlungsraum auftretenden Temperaturerhöhung $T_{KR}$, d.h. $T_{Gas} > (T_{GR} + T_{KR})$, und wobei das Granulat am Austritt aus dem zweiten Behandlungsraum eine mittlere Temperatur $T_{PH}$ aufweist, die um 5 bis 70°C grösser ist als die Summe der Granulattemperatur $T_{GR}$ und der durch freigesetzte Kristallisationswärme im zweiten Behandlungsraum auftretenden Temperaturerhöhung $T_{KR}$, d.h. $(T_{GR} + T_{KR} + 70°C) \geq T_{PH} \geq (T_{GR} + T_{KR} + 5°C)$.

Die vorliegende Erfindung ist zur Behandlung von kristallisierbaren Polykondensaten vorgesehen. Geeignete Polykondensate umfassen kristallisierbare, thermoplastische Polykondensate, wie zum Beispiel Polyamide, Polycarbonate und Polyester inklusive Polyhydroxyalkanoate, Polylaktide oder deren Copolymere, die durch eine Polykondensationsreaktion unter Abspaltung eines niedermolekularen Reaktionsproduktes gewonnen werden. Dabei kann die Polykondensation direkt zwischen den Monomeren erfolgen oder über eine Zwischenstufe, die anschliessend durch Transesterifikation umgesetzt wird, wobei die Transesterifikation wiederum unter Abspaltung eines niedermolekularen Reaktionsproduktes oder durch Ringöffnungspolymerisation erfolgen kann. Im Wesentlichen ist das so gewonnene Polykondensat linear, wobei eine geringe Anzahl an Verzweigungen entstehen kann.

Polykondensate eines Polymertyps werden jeweils aus den gleichen Hauptmonomeren gewonnen. Eine begrenzte Menge weiterer Monomere, sogenannter Comonomere, kann dabei zum Einsatz kommen.

Polyamide sind Polymere, welche üblicherweise durch Polykondensation aus einer Diamin-Komponente mit der allgemeinen Struktur $H_2N$-R1-$NH_2$ und einer Dicarbonsäure-Komponente mit der allgemeinen Struktur HOOC-R2-COOH gewonnen werden, wobei R1 und R2 üblicherweise gegebenenfalls substituierte, lineare oder verzweigte aliphatische Kohlenwasserstoffe mit 1 bis 15 Kohlenstoffatomen, aromatische oder heteroaromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoff- oder Stickstoffatomen und 3 bis 10 Kohlenstoffatomen sind.

Anstelle der Dicarbonsäure kann auch ihr entsprechendes Dicarbonsäurehalogenid, vorzugsweise Dicarbonsäurechlorid eingesetzt werden.

Beispiele solcher Polyamide sind PA6,6, das aus Hexamethylendiamin und Adipinsäure hergestellt wird, oder PA-mXD6, das aus m-Xylylendiamin und Adipinsäure hergestellt wird.

Polyamide sind auch Polymere mit sich wiederholenden Amidgruppen mit der allgemeinen Struktur H-[N(H)-R-CO]x-OH, wobei R üblicherweise ein gegebenenfalls substituierter, linearer oder verzweigter aliphatischer Kohlenwasserstoff mit 1 bis 15 Kohlenstoffatomen, ein aromatischer oder heteroaromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Polyamide sind auch Polymere, welche durch Ringöffnungspolymerisation aus heterozyklischen Monomeren mit wenigstens einer Amidgruppe hergestellt werden, wie zum Beispiel Polycaprolactam (PA6) hergestellt aus Caprolactam.

Polyester sind Polymere, welche üblicherweise durch Polykondensation aus einer Diol-Komponente mit der allgemeinen Struktur HO-R1-OH und einer Dicarbonsäure-Komponente mit der allgemeinen Struktur HOOC-R2-COOH gewonnen werden, wobei R1 und R2 üblicherweise gegebenenfalls substituierte, lineare oder verzweigte aliphatische Kohlenwasserstoffe mit 1 bis 15 Kohlenstoffatomen, aromatische oder heteroaromatische Kohlenwasserstoffe mit 1 bis 3 aromatischen Ringen, zyklische Kohlenwasserstoffe mit 4 bis 10 Kohlenstoffatomen oder heterozyklische Kohlenwasserstoffe mit 1 bis 3 Sauerstoffatomen und 3 bis 10 Kohlenstoffatomen sind.

Üblicherweise werden lineare oder zyklische Diol-Komponenten und aromatische oder heterozyklische Dicarbonsäure-Komponenten verwendet Anstelle der Dicarbonsäure kann auch ihr entsprechender Diester, üblicherweise Dimethylester eingesetzt werden.

Typische Beispiele der Polyester sind Polyethylenterephthalat (PET), Polybutylenterephthalat (PBT), Polytrimethylenterephthalat (PTT), Polyethylenfuranoat (PEF), Polytrimethylenfuranoat (PTF), Polybutylensuccinat (PBS) und Polyethylennaphthalat (PEN), die entweder als Homopolymer oder als Copolymere zum Einsatz kommen.

Ein Beispiel ist Polyethyleneterephthalat, das aus seinen Monomeren, einer Diol-Komponente und einer Dicarbonsäure-Komponente, gewonnen wird, wobei die Diol-Komponente als Hauptmonomer aus Ethylenglykol (1,2- Ethandiol) und die Dicarbonsäure-Komponente als Hauptmonomer aus Terephthalsäure besteht. Als Comonomere kommen weitere lineare, cyclische oder aromatische Diol- und Dicarbonsäureverbindungen in Frage. Typische Comonomere sind Diethylenglykol (DEG), Isophthalsäure (IPA) oder 1,4-Bishydroxymethylcyclohexan (CHDM).

Ein weiteres Beispiel ist Polyethylenfuranoat, das aus seinen Monomeren, einer Diol-Komponente und einer Dicarbonsäure-Komponente, gewonnen wird, wobei die Diol-Komponente als Hauptmonomer aus Ethylenglykol (1,2- Ethandiol) und die Dicarbonsäure-Komponente als Hauptmonomer aus 2,5-Furandicarbonsäure besteht. Als Comonomere kommen weitere lineare, cyclische oder aromatische Diol- und Dicarbonsäureverbindungen in Frage. Typische Comonomere sind Diethylenglykol (DEG) oder Trimethylenglykol.

Polyester sind auch Polymere mit sich wiederholenden Estergruppen mit der allgemeinen Struktur $H-[O-R-CO]_x-OH$, wobei R üblicherweise ein gegebenenfalls substituierter, linearer oder verzweigter aliphatischer Kohlenwasserstoff mit 1 bis 15 Kohlenstoffatomen, ein aromatischer oder heteroaromatischer Kohlenwasserstoff mit 1 bis 3 aromatischen Ringen, ein zyklischer Kohlenwasserstoff mit 4 bis 10 Kohlenstoffatomen oder ein heterozyklischer Kohlenwasserstoff mit 1 bis 3 Sauerstoff- oder Stickstoffatomen und 3 bis 10 Kohlenstoffatomen ist.

Ein Beispiel sind Polyhydroxyalkanoate mit der allgemeinen Struktur $H-[O-C(R)H-(CH_2)_n-CO]_x-OH$, wobei R üblicherweise ein Wasserstoff oder ein linearer oder verzweigter aliphatischer Kohlenwasserstoff mit 1 bis 15 Kohlenstoffatomen und n gleich 1 bis 10 ist. Beispiele sind Poly-4-hydroxybutyrat und Poly-3-hydroxyvalerat.

Ein weiteres Beispiel sind Polylactide mit der allgemeinen Struktur $H-[O-C(R)H-CO]_x-OH$, wobei R üblicherweise eine Methylgruppe oder ein aliphatischer Kohlenwasserstoffe mit 1 bis 15 Kohlenstoffatomen ist.

Ein weiteres Beispiel ist die Polyglycolsäure mit der allgemeinen Struktur $H-[O-CH_2-CO]_x-OH]$.

Polyester sind auch Polymere, welche durch Ringöffnungspolymerisation aus heterozyklischen Monomeren mit einer Estergruppe, wie zum Beispiel Polycaprolacton aus Caprolacton, oder durch Ringöffnungspolymerisation aus heterozyklischen Monomeren mit wenigstens zwei Estergruppen, wie zum Beispiel Polylactid aus Lactid, hergestellt werden.

Das am meisten verbreitete Polylactid ist die Polymilchsäure mit der Struktur $H-[O-C(CH_3)H-CO]_x-OH$. Durch die Chiralität der Milchsäure existieren verschiedene Formen der Polymilchsäure. Homopolymere sind Poly-L-Lactid (PLLA), das üblicherweise aus L,L-Lactid hergestellt wird, und Poly-D-Lactid (PDLA), das üblicherweise aus D,D-Lactid hergestellt wird.

Copolymere wie Poly-(L-Lactid-co-D,L-Lactid) enthalten geringe Mengen an Lactid-Einheiten mit einer Chiralität, die sich vom Hauptmonomer unterscheidet.

Polyester können auch durch Biosynthese durch Mikroorganismen oder in pflanzlichen Zellen hergestellt werden, woraus sie durch Aufschluss der Zelle gewonnen werden.

Bei den geeigneten Polykondensaten kann es sich um kristallisierbare Homopolymere handeln. Trotz der Bezeichnung Homopolymer kann sich im Herstellprozess ein geringer Anteil an Comonomeren bilden. So ist bei der Herstellung von Polyethyleneterephthalat die Bildung von Diethyleneglykol aus Ethylenglykol bekannt. Viele geeignete Polykondensate sind jedoch kristallisierbare Copolymere, die einen gewissen Anteil an Comonomer enthalten. Die Comonomere können als Teil der Monomere in den Herstellprozess des Polykondensates eingeführt werden oder sie bilden sich als Teil des Herstellprozesses, wodurch sich üblicherweise eine zufällige Verteilung ergibt. Die Comonomere können auch als Blöcken, hergestellt aus unterschiedlichen Monomeren, eingefügt werden, woraus sich sogenannte Blockcopolymere ergeben.

Typisch Mengen eines oder mehrerer Comonomere reichen von 1% bis zu ungefähr 30%. Durch die Tatsache, dass in vielen Fällen ein übergrosser Anteil an Comonomer die Kristallisation gänzlich verhindert, kann der maximal Gehalt an Comonomer auf unter 20%, bevorzugt unter 10% beschränkt sein.

Bei den geeigneten Polykondensaten kann es sich um Polymergemische handeln, welche eine beliebige Anzahl und Menge von unterschiedlichen Polymertypen enthalten kann. Eine kleine Menge eines Polymeren kann als Nukleierungsmittel in Polykondensaten wirken und dadurch dessen Kristallisationsrate erhöhen. Spezifische Polykondensatgemische können untereinander wechselwirkende Kristallstrukturen bilden, mit einem Kristallisationsverhalten, das von den einzelnen Komponenten abweicht.

Ein Beispiel dafür ist ein Gemisch aus PDLA und PLLA, welches eine stereocomplexe Kristallstruktur mit erhöhter Kristallinität bildet.

Nach der Polymerisation hat jede Polykondensatkette kettenbeendende Gruppen mit üblicherweise der Funktionalität von wenigstens einem seiner Monomere. Als Beispiel kann eine Polyesterkette eine oder mehrere Hydroxyl- und/oder Carboxylendgruppen haben. Eine Polyamidkette kann eine oder mehrere Hydroxyl- und/oder Aminendgruppen haben. Solche Endgruppen können durch ein sogenanntes Endcapping-Reagens modifiziert sein, oder sie können durch eine Abbaureaktion modifiziert sein. Obwohl dies bei den obenstehenden allgemeinen Strukturen nicht spezifisch erwähnt ist, können geeignete Polymere derartige modifizierte Endgruppen haben.

Bei dem Polykondensat kann es sich um ein Neumaterial oder um ein Recyclat handeln. Als Recyclate werden wiederaufbereitete Polymere aus den Herstell- und Verarbeitungsprozessen (post industrial) oder nach dem Konsumentengebrauch gesammelte und wiederaufbereitete Polymere (post consumer) bezeichnet.

Dem Polykondensat können Additive zugegeben werden. Als Additive eignen sich zum Beispiel Katalysatoren, Farbstoffe und Pigmente, UV-Blocker, Verarbeitungshilfsmittel, Stabilisatoren, Schlagzähmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper, wie Kugeln oder Fasern, sowie reaktive Substanzen, wie zum Beispiel Sauerstoffabsorber, Acetaldehydabsorber oder molekulargewichtserhöhende Substanzen.

Der Granulationsvorrichtung zum Formen eines Polykondensatgranulats wird eine Polykondensatschmelze als Ausgangsmaterial zugeführt. Die Herstellung einer Polykondensatschmelze erfolgt mittels im Stand der Technik bekannter Apparaten oder Reaktoren (z.B. Scheirs/Long (Hrsg.), Modern Polyesters, Wiley 2003, insbesondere S- 31-104). Grundsätzlich kommen Polymerisationsreaktoren in Frage, in denen Polykondensate in flüssiger Phase hergestellt werden, wie zum Beispiel Rührkessel, Käfigreaktoren oder Scheibenreaktoren, oder aber Apparaturen, in denen zuvor hergestellte Polykondensate aufgeschmolzen werden, wie zum Beispiel Extruder oder Kneter. Die Polykondensatschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten (d.h. Teilchen definierter Form und Grösse) aus den Polykondensatsträngen können die im Stand der Technik bekannten Granulationstechniken, wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl an einzelnen Granulaten aufgetrennt, wobei das Auftrennen vor oder nach dem Verfestigen erfolgen kann. Das Auftrennen erfolgt zum Beispiel durch eine selbstständige Tropfenbildung, durch den Einsatz eines flüssigen Schermediums oder durch ein mechanisches Trennen, insbesondere Schneiden. Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke.

Das Verfestigen der Polykondensatschmelze erfolgt durch Kühlen mit Hilfe mindestens eines flüssigen Kühlmediums oder einer Kombination verschiedener flüssiger Kühlmedien. Als flüssiges Kühlmedium sind insbesondere Flüssigkeiten geeignet, die eine hohe spezifische Wärmekapazität, bevorzugt grösser als 2 kJ/(kg·K) und einen ausreichend hohen Siedepunkt, bevorzugt grösser als 90°C aufweisen, sowie das Polykondensat nicht wesentlich angreifen oder verändern und keine toxischen Rückstände im Polykondensat hinterlassen. Erfindungsgemäss bevorzugt wird ein einziges flüssiges Kühlmedium verwendet. Bevorzugt sind Wasser oder Ethylenglykol oder deren Gemische. Besonders bevorzugt ist Wasser als Kühlmedium.

Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält. Trotz der Verwendung des Begriffs "Wasser" in der Bezeichnung der Granulationseinrichtungen können auch andere flüssige Medien verwendet werden. Das Abkühlen kann erfindungsgemäss vor, während oder nach dem Formen des Materials zu Granulat erfolgen.

Gemäss einer ersten erfindungsgemässen Ausführungsform hat das flüssige Kühlmedium bei Eintritt in die Granulationsvorrichtung eine Temperatur, welche unterhalb der Glasübergangstemperatur (auch Glasübergangspunkt genannt, mit $T_g$ abgekürzt) des zu formenden Polykondensats liegt. Bei Polyestern beginnt das Granulat oberhalb der Glasübergangstemperatur des Materials zu verkleben, d.h. die Teilchen haften unter Bildung von Agglomeraten aneinander. Die Glasübergangstemperatur von Polyethylenterephthalat liegt beispielsweise bei etwa 75°C bis 82°C (abhängig vom Comonomergehalt und der Art der zugesetzten Comonomere).

Die Glasübergangstemperatur eines Polykondensats kann mit Hilfe einer DSC (Digital scanning calorimetry)-Messung ermittelt werden. DSC ist ein herkömmliches, dem Fachmann hinlänglich bekanntes Verfahren. Vorrichtungen für DSC-Messungen sind ebenfalls hinlänglich bekannt und käuflich erhältlich. Beispielhaft sei das Gerät Mettler DSC821 genannt. Zur Messung der Glasüberganstemperatur eines Polykondensats wie eines Polyesters können beispielsweise 5-25 mg einer entsprechenden Polymerprobe in einem Mettler DSC821-Messgerät mit einer Rate von 10°C/min von 25°C auf 290°C erhitzt werden. Die Probe wird 1 min bei 290°C gehalten, dann rasch auf Raumtemperatur abgekühlt und ein zweites Mal mit einer Rate von 10°C/min von 25°C auf 290°C erhitzt. Der Glasübergangspunkt ($T_g$) wird aus diesem zweiten Durchgang ermittelt. Als Tg wird der Wendepunkt des entsprechenden Signals im DSC herangezogen.

Erfindungsgemäss bevorzugt weist das flüssige Kühlmedium, vorzugsweise Wasser, abhängig vom Tg des zu formenden Polykondensats entsprechend eine Temperatur von weniger als 85°C, besonders bevorzugt von zwischen 50°C und 80°C insbesondere bevorzugt von zwischen 60°C und 75°C auf.

Gemäss einer zweiten erfindungsgemässen Ausführungsform hat das flüssige Kühlmedium bei Eintritt in die Granulationsvorrichtung eine Temperatur, welche mehr als 50°C aber mindestens 10°C unterhalb seines Siedepunktes liegt. Im Fall von Wasser beträgt die Temperatur des Kühlmediums gemäss dieser Ausführungsform bei Normaldruck daher 50°C bis 90°C. Der Siedepunkt ist bekanntlich druckabhängig; mit fallendem Aussendruck nimmt der Siedepunkt ab und umgekehrt.

Das flüssige Kühlmedium wird erfindungsgemäss bevorzugt aus ökonomischen Gründen in einem Kreislaufsystem geführt. Während der vorstehend beschriebenen Granulation kommt es jedoch zu einer Abnahme der Menge an flüssigem Kühlmedium (vorzugsweise Wasser), da ein Teil desselben verdampft. Dies trifft insbesondere auf Ausführungsformen zu, bei denen die Granulation mit einem flüssigen Kühlmedium mit erhöhter Temperatur durchgeführt wird. Der dadurch aus dem Kreislaufsystem entwichene Anteil an flüssigem Kühlmedium muss regelmässig ersetzt werden, um die für eine Granulation erforderliche Menge an Kühlmedium im System bereit zu halten. Die Menge an frischem Kühlmedium beträgt dabei üblicherweise 5 bis 200 Liter pro Tonne hergestellter Polykondensatgranulate. Optional kann verdampftes Kühlmedium kondensiert und in den Kreislauf zurückgeführt werden, wodurch sich die Menge an frischem Kühlmedium verringert.

Teilkristalline Polykondensatgranulate bezeichnen dabei Polykondensatgranulate, die sowohl amorphe Zonen wie auch Zonen mit kristalliner Struktur aufweisen.

Die derart hergestellten Granulate sollen bevorzugterweise eine definierte Granulatform, wie zum Beispiel zylinderförmig, kugelförmig, tropfenförmig, kugelähnlich oder einer Design-Form, wie sie zum Beispiel in EP 0 541 674 vorgeschlagen ist, aufweisen. Die mittlere Granulatgrösse soll zwischen 0.1 mm und 10 mm, bevorzugterweise zwischen 0.5 mm und 3 mm und besonders bevorzugt zwischen 0.85 mm und 2.5 mm liegen.

Als mittlere Granulatgrösse gilt der statistische Mittelwert des mittleren Granulatdurchmessers, der sich aus dem Durchschnitt aus Granulathöhe, -länge und -breite (mit bekannten Methoden messbar) ergibt. Die Granulatgrössenverteilung soll in einem engen Spektrum gehalten werden. Bevorzugt ist die Standardabweichung der Granulatgewichte von 100 gemessenen Granulaten zwischen 2 und 20%.

Gemäss der vorliegenden Erfindung wird das hergestellte Granulat einer Direktkristallisation unterzogen, d.h. das Granulat wird nicht derart stark abgekühlt (z.B. auf Raumtemperatur), dass es für eine nachfolgende Kristallisation mit grossem Energieaufwand erhitzt werden muss. Gemäss der vorliegenden Erfindung wird das Granulat auf eine mittlere Granulat-Temperatur abgekühlt, die innerhalb des Kristallisationstemperaturbereiches des Polykondensates liegt. Dies wird erreicht, indem die Temperatur des Kühlmediums wie vorstehend beschrieben gewählt und gegebenenfalls zusätzlich die Verweilzeit des Granulats im Kühlmedium entsprechend kurz gewählt wird. Erfindungsgemäss bevorzugt erfolgt das Abtrennen des Kühlmediums vom Granulat innerhalb von 0,1 bis 5 s, besonders bevorzugt innerhalb von 0,3 bis 3s nach Zugabe des Kühlmediums. Gleichzeitig mit dem Abkühlen können die Polykondensatgranulate zu einem weiteren Prozessschritt gefördert werden.

Die mittlere Granulat-Temperatur bezeichnet dabei den Mittelwert der Temperaturen der einzelnen Granulate, wobei jedes Granulat eine mittlere Temperatur aufweist, die sich ergibt, wenn sich das Temperaturprofil im Granulat, ohne Wärmeaustauch nach aussen, ausgleicht.

Der geeignete Kristallisationstemperaturbereich wird ersichtlich, wenn die Kristallisationshalbwertszeit (t½) als Funktion der Temperatur aufgezeichnet wird. Er ist nach oben und unten begrenzt durch die Temperatur, bei der die Kristallisationshalbwertszeit das ungefähr 10-Fache der minimalen Kristallisationshalbwertszeit (t½ min) erreicht. Da sehr kurze Kristallisationshalbwertszeiten (t½) nur schwer bestimmbar sind, wird als Minimalwert t½ min = 1 Minute eingesetzt. Zum Beispiel liegt der geeignete Kristallisationstemperaturbereich bei Polyethylenterephthalat zwischen 110 und 220 °C, bei Polyethylenfuranoat zwischen 110 und 190°C und bei Poly-L-lactid zwischen 80 und 140°C.

Die Kristallisationshalbwertszeit (t½) wird mittels isothermer Kristallisation mittels DSC (differential scanning calorimetry) bestimmt. Die Kristallisationshalbwertszeit entspricht der Zeit, die bei der gegebenen Temperatur benötigt wird, um 50% der erreichbaren Kristallinität zu erreichen. Die minimale Kristallisationshalbwertszeit (t½ min) ist die kürzeste Kristallisationshalbwertszeit die im Kristallisationstemperaturbereich erhalten wird.

Erfindungsgemäss bevorzugt, im Fall von Polyethylenterephthalat (PET) als zu behandelndem Polymer, erfolgt eine Abkühlung des Granulats auf eine Temperatur im Bereich von 110 bis 180 °C, vorzugsweise auf zwischen 115 °C und 160 °C und besonders bevorzugt von 120 °C bis 150 °C.

Nach dem Abkühlen wird das Kühlmedium von den Granulaten getrennt. Optional erfolgt eine weitere Behandlung (Konditionierung) der Granulate in einem flüssigen Medium, wofür direkt das Kühlmedium oder eine andere Flüssigkeit verwendet werden kann.

Das Trennen der Granulate von einem flüssigen Kühlmedium kann mittels im Stand der Technik bekannter Trennvorrichtungen erfolgen. Dabei kann es sich lediglich um passive Trennvorrichtungen, wie zum Beispiel Gitter oder Roste, handeln, durch die das Kühlmedium, nicht aber das Granulat durchtreten kann. Üblicherweise werden aktive Trennvorrichtungen zumindest für einen Teil der Trennung verwendet, wobei die Trennung zum Beispiel aufgrund einer Gasdurchströmung, einer Zentrifugalkraft oder eines Aufpralls erfolgt. Solche Vorrichtungen sind zum Beispiel als Absaugvorrichtungen, Pralltrockner oder Zentrifugaltrockner bekannt. Ein Zentrifugaltrockner ist bevorzugt.

Das Granulat wird gemäss einer bevorzugten Ausführungsform der Erfindung in einem zweistufigen Prozess vom Kühlmedium abgetrennt, d.h. gemäss der vorliegenden Erfindung kann der Schritt des Abtrennens des flüssigen Kühlmediums vom Granulat das vorstehend beschriebene Trennen und ein anschliessendes Trocknen des Granulats umfassen. Nach einer ersten Trennung mit den vorstehend beschriebenen Trennvorrichtungen wird bei dieser erfindungsgemässen Ausführungsform das Granulat während des Schritts des Abtrennens des Kühlmediums zudem einer Trocknungsstufe unterzogen, um das Kühlmedium vollständig vom Granulat abzutrennen. Hierfür wird das Granulat aus einer vorstehend beschriebenen Einheit zum Formen des Granulats über eine Verbindungsleitung in eine Einheit zum Abtrennen des Kühlmediums und in eine Einheit zum Trocknen des Granulats (Trocknungsvorrichtung) überführt. Die Überführung des Granulats in die Trocknungsvorrichtung erfolgt mit einer derartigen Geschwindigkeit, dass es nicht zu einer Abkühlung des Granulats unter dessen Kristallisationstemperaturbereich kommt. Die Fliessgeschwindigkeit des Granulats in der Verbindungsleitung kann durch Zufuhr von Luft oder einem anderen geeigneten Gas in die Verbindungsleitung erhöht werden.

Einheiten zum Trocknen eines Granulats (Trocknungsvorrichtungen) sind aus dem Stand der Technik bekannt. Erfindungsgemäss bevorzugt wird ein Reaktor verwendet, in welchem ein erster Behandlungsraum bereitgestellt ist. Innerhalb des Reaktors erfolgen die Abtrennung des Kühlmediums (in der Regel Wasser) und im ersten Behandlungsraum das Trocknen des abgetrennten Granulats durch Verdampfen des Kühlmediums. Für das Verdampfen des Kühlmediums wird an den ersten Behandlungsraum eine Temperatur im Bereich von 100 bis 200°C, vorzugsweise von 110 °C bis 160 °C und besonders bevorzugt von 120 bis 150 °C angelegt. Das Granulat verweilt im ersten Behandlungsraum vorzugsweise für einen Zeitraum von einer Zehntelsekunde bis zu 10 Sekunden. Erfindungsgemäss bevorzugt weist das Granulat nach Austritt aus dem ersten Behandlungsraum eine Temperatur $T_{GR}$ im Bereich von 100-180°C, vorzugsweise von 120 °C bis 160°C auf.

Die Trocknungsvorrichtung weist mindestens eine Einfüllöffnung für die Zufuhr des Granulats in die Einheit auf. Bei der Einfüllöffnung kann es sich zum Beispiel um eine Öffnung im Gehäuse oder um den Austritt aus einem Rohr, das in das Gehäuse geführt wird, handeln. Weiterhin weist die Trocknungsvorrichtung mindestens eine Austragsöffnung für die Wegfuhr des Granulats aus der Einheit auf. Bei der Austragsöffnung kann es sich zum Beispiel um eine Öffnung im Gehäuse oder um den Eintritt in ein Rohr, das aus dem Gehäuse heraus geführt wird, handeln. Weiterhin weist die Trocknungsvorrichtung mindestens eine Austragsöffnung für die Wegfuhr des flüssigen Kühlmediums aus der Einheit auf.

Im ersten Behandlungsraum liegt eine Gasphase vor, welche das verdampfende Kühlmedium aufnimmt. Erfindungsgemäss bevorzugt handelt es sich bei dem Gas um Luft. Es können aber auch andere Gasgemische mit einem niedrigeren Sauerstoffgehalt als Luft verwendet werden. Es muss aber nicht Inertgas eingesetzt werden. Gemäss beispielhaften Ausführungsformen kann der Sauerstoffgehalt im ersten Behandlungsraum mehr als 1 Gew.-%, vorzugsweise mehr als 5 Gew.-% und besonders bevorzugt mehr als 10 Gew.-% betragen. Um oxidativen Abbau des Materials zu vermeiden, sollte aber der Sauerstoffgehalt im ersten Behandlungsraum den Sauerstoffgehalt von Luft (rund 21%) nicht übersteigen.

Die Trocknungsvorrichtung ist vorzugsweise keine abgeschlossene Einheit. Die Trocknungsvorrichtung weist vorzugsweise mindestens eine Austrittsöffnung zur Abfuhr von Gas, vorzugsweise Luft, auf. Gemäss einer bevorzugten Ausführungsform mündet die Austrittsöffnung der Trocknungsvorrichtung in eine Gasabfuhrleitung, in welcher ein Ventilator zur Luftzirkulation durch die Trocknungsvorrichtung angeordnet ist.

Die Trocknungsvorrichtung kann weiterhin mindestens eine Eintrittsöffnung zur Einleitung von Gas, vorzugsweise Luft, aufweisen. Die Eintrittsöffnung ist in diesem Fall am entgegen gesetzten Ende des ersten Behandlungsraums zur Austrittsöffnung angeordnet, um ein vollständiges Durchströmen des ersten Behandlungsraums mit Gas zu gewährleisten. Es ist aber auch möglich, dass die Eintrittsöffnung zur Einleitung von Gas nicht in der Trocknungsvorrichtung angeordnet ist, sondern in der nachfolgenden Verbindungseinheit.

Gemäss einer bevorzugten Ausführungsform der vorliegenden Erfindung wird das Gas über einen Ansaugfilter der Eintrittsöffnung zugeführt. In der zur Eintrittsöffnung führenden Gasleitung kann ein Ventilator zur Luftzirkulation durch die Trocknungsvorrichtung angeordnet sein. Dieser Ventilator kann zusätzlich zum Ventilator in der Gasabfuhrleitung vorgesehen sein oder an dessen Stelle treten. Gemäss einer bevorzugten Ausführungsform ist somit nur in der Gaszufuhrleitung ein Ventilator vorgesehen.

Gemäss einer weiteren Ausführungsform können die zur Eintrittsöffnung führende Leitung und die von der Austrittsöffnung abgehende Leitung miteinander untere Ausbildung eines geschlossenen Kreislaufs verbunden sein. Bei dieser Ausführungsform muss das Gas vor Wiedereintritt in den ersten Behandlungsraum aber durch einen Kondensator geführt werden, um das im Gas befindliche verdampfte Kühlmedium abzutrennen.

Die Vorrichtung weist vorzugsweise einen Kühlmedium-Kreislauf auf. Das Kühlmedium wird aus einem Vorratsbehälter (Tank) vorzugsweise über eine Umwälzpumpe und gegebenenfalls einen Wärmetauscher (zum wahlweisen Erhitzen oder Abkühlen des Kühlmediums) in die Formeinheit (Granulationsvorrichtung) geführt. Das in der Trocknungsvorrichtung abgetrennte Kühlmedium kann über eine Rohrleitung zurück in den Vorratsbehälter geführt werden.

Im ersten Behandlungsraum kommt es bei gleichbleibendem Verhältnis von Luftzu- und abfuhr während des Trocknungsvorgangs zu einem Druckanstieg, da flüssiges Kühlmedium in den gasförmigen Zustand übergeht und die Gasphase im ersten Behandlungsraum zunimmt.

Nach dem Abtrennen der Polykondensatgranulate vom flüssigen Kühlmedium erfolgt ein direkter Übertrag in den nachfolgenden Kristallisator, der einen zweiten Behandlungsraum umfasst. Erfindungsgemäss wird dies mit Hilfe einer Verbindungsleitung erreicht, welche zwischen Trocknungsvorrichtung und Kristallisator angeordnet ist und die Austragsöffnung der Trocknungsvorrichtung mit der Einlassöffnung des nachgeschalteten Kristallisators verbindet. Die Verbindungsleitung ist bevorzugt derart ausgestaltet, dass ein ungehinderter Durchtritt des zu behandelnden Materials von der vorgeschalteten Einheit zur nachgeordneten Einheit gewährleistet ist. In der Verbindungsleitung sind daher bevorzugt keine Absperreinheiten vorhanden. Dies hat den Zweck, das Risiko eines Anhaftens der heissen, klebrigen Polymerpartikel in der Verbindungsleitung auszuschliessen. Die Verbindungsleitung kann einen Gaseinlass aufweisen.

In der Verbindungsleitung sollte eine ständige Relativbewegung zwischen den einzelnen Granulaten gewährleistet sein, um ein Verkleben des Granulats zu verhindern. Die Relativbewegung lässt sich zum Beispiel erreichen durch eine hohe Fliessgeschwindigkeit in der Verbindungsleitung (grösser als 0.3 m/min, insbesondere grösser als 1 m/min), durch eine Umströmung mit einem Fördergas, durch mechanische Bewegung, zum Beispiel mittels Rührwerk oder Förderschnecke, oder durch Erzeugung einer Schwingung oder Vibration.

Optional ist zwischen Trocknungsvorrichtung und Kristallisator ein Sieb angeordnet, durch das einzelne Granulate mit spezifikationsgemässer Grösse ungehindert durchtreten können, das jedoch Granulatagglomerate und zu grosse Granulate zurück hält.

Um im Fall einer Störung des Kristallisators ein aufwendiges und kostspieliges Entsorgen von Material zu vermeiden, kann die erfindungsgemässe Verbindungsleitung wie in der WO 2008/071278 beschrieben mit einem Zwischenspeicher verbunden sein, in welchen das Material durch eine Steuerungsvorrichtung im Störungsfall geleitet und dort unter Bedingungen (insbesondere Absenkung der Granulat-Temperatur unterhalb seines Glasübergangspunktes) gelagert wird, bei denen eine Agglomeration des Granulats nicht auftritt. Auf den entsprechenden Inhalt der WO 2008/071278 wird hier ausdrücklich Bezug genommen.

Beim Eintritt in den Kristallisator ist das zu behandelnde Granulat in der Regel im Wesentlichen amorph, d.h. es weist einen Kristallisationsgrad von weniger als 10%, vorzugsweise weniger als 5% auf. Erfindungsgemäss bevorzugt weist das Granulat im Fall von Polyethylenterephthalat (PET) vor Eintritt in den Kristallisator einen IV-Wert von 0.4 bis 0.8 dl/g, insbesondere 0.5 bis 0.65 dl/g auf. Der IV-Wert gibt die intrinsische Viskosität eines Polymers an und ist ein Mass für dessen Molekulargewicht. Der IV-Wert und seine Bestimmung sind aus dem Stand der Technik bekannt. Die intrinsische Viskosität (IV) wird erfindungsgemäss nach folgender Vorschrift bestimmt: Zur Messung der Lösungsviskosität wird eine Mischung aus Phenol/Dichlorbenzol (50 : 50 Gew.%) als Lösungsmittel benutzt. Die Polyesterprobe wird während 10 Minuten bei 130°C mit einer Konzentration von 0.5% (0.5g/dl) aufgelöst. Die Messung der relativen Viskosität (R.V.) wird bei 25°C mit einem Ubbelohde-Viskosimeter (nach DIN Anweisung Nr. 53728, Teil 3 vom Januar 1985) durchgeführt. Die relative Viskosität ist der Quotient aus der Viskosität der Lösung und der Viskosität des reinen Lösungsmittels, welcher mit dem Verhältnis der entsprechenden Kapillardurchflussgeschwindigkeit vergleichbar ist. Mit der Gleichung von Huggins wird der Wert der intrinsischen Viskosität aus der gemessenen relativen Viskosität berechnet:

$$I.V. = \frac{\sqrt{1 + 4K_H(R.V. - 1)} - 1}{2 * c * K_H}$$

Mit den obigen Messmethoden (Polymerkonzentration C=0,5.g/dl und der Huggins Konstante $K_H$=0.35) wird die Gleichung:

$$I.V. = \frac{\sqrt{1 + 1.4(R.V. - 1)} - 1}{0.35} \qquad (dl/g)$$

Die Viskosität des Polyesters kann entweder als intrinsische Viskosität (IV) oder als mittleres Molekulargewicht (Zahlenmittel: Mn) angegeben sein. Zur Umrechnung eines IV-Wertes gemessen in Phenol : Dichlormethan = 1: 1 in das mittlere Molekulargewicht wird die Gleichung

$$IV = k \cdot Mn^a$$

verwendet, wobei k=2.1·10⁻⁴ und a=0.82 ist.

Diese Gleichung ist allgemein auf publizierte Daten anwendbar, wenn nicht explizit ein anderes Lösemittelgemisch und die dazu gehörenden Umrechnungsfaktoren gegeben sind.

Erfindungsgemäss bevorzugt durchfliessen die Polykondensatgranulate den zweiten Behandlungsraum im Wesentlichen von oben nach unten, während der zweite Behandlungsraum im Gegenstrom oder alternativ im Kreuzstrom oder im Gleichstrom von einem Prozessgas durchströmt wird. Die Bewegung der Polymerteilchen im Kristallisator erfolgt durch mechanische Bewegung oder vorzugsweise durch den Strom aus Prozessgas.

Als Prozessgase können zum Beispiel Luft, Wasserdampf oder Inertgase wie Stickstoff oder $CO_2$ zum Einsatz kommen. Das Prozessgas kann ein Gemisch mehrerer Prozessgase umfassen. Das Prozessgas kann Additive enthalten, die entweder reaktiv auf das zu behandelnde Polykondensat einwirken, eine Quellwirkung auf das Polykondensat haben oder sich passiv auf dem zu behandelnden Polykondensatgranulaten ablagern.

Der Kristallisator wird als Wirbelbett betrieben. Mit anderen Worten liegen im gesamten zweiten Behandlungsraum oder zumindest in einem Teilbereich des zweiten Behandlungsraums, welcher vom Kristallisator bereitgestellt wird, die Bedingungen eines Wirbelbetts vor.

Als Wirbelbett wird eine Schüttung von Feststoffpartikeln bezeichnet, welche durch eine aufwärtsgerichtete Strömung eines Fluids in einen fluidisierten Zustand versetzt wird. Fliesbett und Sprudelbett sind Ausführungen des Wirbelbetts, die aufgrund unterschiedlicher Fluiddurchströmung unterschiedliche Verwirbelungsintensität ergeben.

Der zweite Behandlungsraum ist von einem Gehäuse umgeben. Der horizontale Querschnitt des Behandlungsraumes kann eine beliebige Form aufweisen, ist bevorzugterweise aber rund oder rechteckig. Der Behandlungsraum ist bevorzugt im Wesentlichen vertikal angeordnet, so dass das Granulat die Vorrichtung von oben nach unten durchfliessen kann. Wichtig ist dabei, dass ein gleichmässiger Produktfluss erreicht werden kann. Der zweite Behandlungsraum ist seitlich durch einen Mantel begrenzt. Die Mantelwand kann dabei aus zylindrischen, konischen oder aus einer Kombination aus konischen und zylindrischen Segmenten bestehen, wodurch sich die Gasgeschwindigkeitsverteilung über die Höhe der Vorrichtung beeinflussen lässt. Eine Aufweitung im Deckenbereich erlaubt dabei eine Reduktion der Gasgeschwindigkeit, was den Austrag von Granulat verhindert. Eine Verengung im Deckenbereich erlaubt eine Erhöhung der Gasgeschwindigkeit, was zu einer stärkeren Verwirbelung führt, wodurch sich allfällige Verklebungen verhindern lassen.

Eine besondere Ausführungsform sieht einen wenigstens annähernd rotationssymmetrischen Gehäusemantel vor, was fertigungstechnische Vorteile sowie Vorteile für einen regelmässigen Produktfluss ergibt.

Im Innern des zweiten Behandlungsraumes können Verdrängungskörper angeordnet sein, die nicht vom Granulat durchflössen werden und somit den zweiten Behandlungsraum verkleinern. Solche Verdrängungskörper können zum Beispiel zur Durchführung von Prozessgas, zur Anpassung der freien Querschnittsfläche oder zur Verbesserung des Granulatflusses eingesetzt werden.

Im Innern des zweiten Behandlungsraumes können Trennwände angeordnet sein, die den zweiten Behandlungsraum in zwei oder mehrere Kammern unterteilen, wobei die Kammern durch Durchlassöffnungen für die Granulate miteinander verbunden sind.

Bevorzugt mündet zumindest eine Einfüllöffnung in den Deckenbereich des zweiten Behandlungsraumes und ermöglicht das Einführen des zu behandelnden Granulats in den zweiten Behandlungsraum. Bei der Einfüllöffnung kann es sich zum Beispiel um eine Öffnung im Gehäuse oder um den Austritt aus einem Rohr, das in das Gehäuse geführt wird, handeln. Die Einfüllöffnung kann in mehrere Segmente unterteilt sein, was eine Verteilung der Granulate im Behandlungsraum erlaubt.

Bevorzugt mündet zumindest eine Austragsöffnung in den unteren Teil des zweiten Behandlungsraumes, durch die behandeltes Granulat aus dem Behandlungsraum ausgetragen werden kann. Bei der Austragsöffnung kann es sich zum Beispiel um eine Öffnung im Gehäuse oder um den Eintritt in ein Rohr, das aus dem Gehäuse heraus geführt wird, handeln. Üblicherweise wird das Granulat durch einen konischen Bereich der Austragsöffnung zugeführt. Der Winkel des Auslaufkonus beträgt zur Horizontalen bevorzugterweise 50 - 80°, wenn das Granulat im Austragskonus nicht fluidisiert oder vibriert wird, und 15 - 60°, insbesondere 30 - 50°, wenn das Granulat im Austragskonus fluidisiert oder vibriert wird. Alternativ kann das Granulat auch mittels einer mechanischen Austragsvorrichtung, wie zum Beispiel einer Schnecke, der Austragsöffnung zugeführt werden.

Unterhalb der Austragsöffnung befindet sich eine Absperreinheit, vorzugsweise eine Schleuseneinheit, wie zum Beispiel eine Zellradschleuse, oder eine Walzeneinheit mit deren Hilfe der Granulatabfluss aus dem Behandlungsraum geregelt wird. Als Regelgrösse kann dabei zum Beispiel die Füllhöhe des Granulates im Behandlungsraum oder das Gewicht der Granulate in der Vorrichtung dienen.

Im Bodenbereich des Behandlungsraumes befindet sich vorzugsweise zumindest eine Zufuhreinrichtung für ein Prozessgas. Die Zufuhreinrichtung weist zumindest eine Eintrittsöffnung auf, durch die Prozessgas in den zweiten Behandlungsraum strömt.

Die Zuführeinrichtung für ein Prozessgas kann Vorrichtungen, wie zum Beispiel nach unten offene Kegel oder Dachreihen sowie Leitungen oder Bleche mit Austrittsbohrungen, umfassen, solange eine ausreichend gleichmässige Verteilung des Prozessgases erfolgt. Eine besondere Ausführung sieht vor, dass der Behandlungsraum nach unten durch eine zumindest teilweise gasdurchlässige Absperreinrichtung, insbesondere ein Lochblech mit einer Vielzahl an Eintrittsöffnungen, begrenzt wird, die von Prozessgas zumindest stellenweise, nicht aber von den Granulaten durchströmt werden kann.

Dazu sind die Öffnungen kleiner als der Durchmesser der Granulate. Die Durchlassfläche weist bevorzugterweise zwischen 1% und 30% auf. Bevorzugt sind Öffnungen zwischen 20 und 90%, insbesondere zwischen 30 und 80% des Durchmessers der Granulate. Die Anzahl, Grösse und Anordnung der Öffnungen kann dabei gleichmässig oder ungleichmässig sein. Die Absperreinrichtung ist konisch oder horizontal angeordnet.

Unterhalb der Absperreinrichtung kann sich ein Verteilerraum befinden, durch den Prozessgas zur Absperreinrichtung geführt wird. In diesen Verteilerraum mündet zumindest eine Zufuhröffnung für Prozessgas. Weiterhin können Vorrichtungen zur Verteilung des Prozessgases, wie Staubleche, Ventile oder Klappen, wie auch getrennte Kanäle zur individuellen Prozessgaszufuhr angeordnet sein. Alternativ kann der Behandlungsraum nach unten durch eine nicht gasdurchlässige Absperreinrichtung begrenzt sein. In diesem Fall kann es sich bei der zumindest einen Zufuhreinrichtung für ein Prozessgas, um eine Öffnung im Gehäuse, um den Austritt aus einem Rohr oder mehreren Rohren, die in das Gehäuse geführt werden, oder um ein einzelnes Dach oder eine Dachreihe, die entweder mit Löchern versehen oder nach unten offen sind, handeln. Dabei kann ein anfälliger Verdrängungskörper zur Gaszufuhr verwendet werden.

Eine besondere Ausführung sieht vor, dass zusätzlich zur zumindest einen Zuführeinrichtung für Prozessgas im Bodenbereich des zweiten Behandlungsraumes zumindest eine weitere Zufuhreinrichtung für Prozessgas in den zweiten Behandlungsraum mündet, wodurch sich eine mehrstufige Wärmezufuhr sowie ein mehrstufiges Gasgeschwindigkeitsprofil erreichen lässt.

Im Deckenbereich des zweiten Behandlungsraumes befindet sich vorzugsweise zumindest eine Wegführeinrichtung für das Prozessgas. Bei der Wegführeinrichtung kann es sich zum Beispiel um eine Öffnung im Gehäuse oder um den Eintritt in ein Rohr, das aus dem Gehäuse heraus geführt wird, handeln. Die Wegführeinrichtung kann sich dabei im Mantel oder der Decke des Behandlungsraumes befinden. Gemäss einer alternativen Ausführungsform ist keine derartige Wegführeinrichtung vorgesehen. In diesem Fall verlässt das Prozessgas den zweiten Behandlungsraum durch die Verbindungsleitung vom ersten zum zweiten Behandlungsraum.

In oder unterhalb der Wegführeinrichtung können sich Vorrichtungen befinden, die den Durchtritt von Prozessgas erlauben, den Durchtritt von Granulaten aber behindern. Dies kann zum Beispiel durch einen gebogenen oder umgelenkten Durchflusskanal oder mit Hilfe von ablenkenden Einbauten, wie zum Beispiel einem ZickZack-Abscheider, erfolgen.

Das Granulat wird im zweiten Behandlungsraum durch Energiezufuhr von aussen mit Hilfe des heissen Prozessgases erhitzt. Hierbei wird das Prozessgas mit einer Temperatur $T_{Gas}$ in den zweiten Behandlungsraum geführt, die grösser ist als die Summe der Granulattemperatur $T_{GR}$ und der durch freigesetzte Kristallitionswärme im zweiten Behandlungsraum auftretenden Temperaturerhöhung $T_{KR}$, d.h. $T_{Gas} > (T_{GR} + T_{KR})$. Die Gastemperatur $T_{Gas}$ liegt also über der mittleren Granulattemperatur, welche die Polykondensatgranulate ohne Energiezufuhr von aussen im zweiten Behandlungsraum erreichen würden, woraus sich der Vorteil ergibt, dass sich die Polykondensatgranulate auf eine konstante und definierte Austrittstemperatur einstellen lassen. Es hat sich erfindungsgemäss gezeigt, dass zum Erhalt eines homogen kristallisierten Polykondensats die Energiezufuhr von aussen unter Berücksichtigung der durch freigesetzte Kristallisationswärme im zweiten Behandlungsraum auftretenden Temperaturerhöhung $T_{KR}$ zu erfolgen hat.

Gemäss einer bevorzugen Ausführungsform der vorliegenden Erfindung wird das Verhältnis X der Massenströme von Gas ($m_G$) und Granulat ($m_P$) (X = $m_G/m_P$) im zweiten Behandlungsraum so eingestellt, dass $1 \leq (T_{Gas} - T_{KR} - T_{GR}) * X \leq 80$, vorzugsweise $2 < (T_{Gas} - T_{KR} - T_{GR}) * X \leq 80$, besonders bevorzugt $4 < (T_{Gas} - T_{KR} - T_{GR}) * X \leq 80$ ist. Damit wird ein Polykondensat mit besonders vorteilhaften Eigenschaften hinsichtlich homogener Kristallisation erhalten.

Durch die Zunahme der Kristallinität wird Kristallisationswärme freigesetzt. Aufgrund dieser Kristallisationswärme erfolgt eine Temperaturerhöhung $T_{KR}$, die sich aus der freigesetzten Wärmemenge geteilt durch die spezifische Wärmekapazität des Polykondensates ergibt.

Im Allgemeinen liegt die durch freigesetzte Kristallisationswärme im zweiten Behandlungsraum auftretende Temperaturerhöhung $T_{KR}$ im Bereich von 5°C bis 40°C. Insbesondere im Fall von Polyethylenterephthalat (PET) liegt $T_{KR}$ im Bereich von 10°C bis 30°C.

Das Granulat wird erfindungsgemäss bevorzugt im zweiten Behandlungsraum (d.h. im Kristallisator) auf eine Temperatur erhitzt, die 30°C oder mehr unter dem Schmelzpunkt des Polykondensates liegt. Im Fall von Polyethylenterephthalat (PET) wird das Granulat erfindungsgemäss bevorzugt im zweiten Behandlungsraum (d.h. im Kristallisator) auf eine Temperatur im Bereich von 140 bis 220°C, insbesondere bevorzugt auf 150 °C bis 190°C erhitzt.

Erfindungsgemäss bevorzugt beträgt die Verweilzeit des Materials 1 bis 30 Kristallisationshalbwertszeiten. Im Fall eines schnell kristallisierenden Polymers wie Polyethylenterephthalat (PET) mit einem Comonomergehalt von weniger als 5% beträgt die Verweilzeit somit 1 bis 30 Minuten, vorzugsweise 1 bis 15 Minuten, besonders bevorzugt 1 bis 8 Minuten. Langsam kristallisierende Polymere müssen entsprechend länger im zweiten Behandlungsraum verweilen, bis der gewünschte Anstieg des Kristallisationsgrades erreicht ist.

Erfindungsgemäss bevorzugt erfolgt die Kristallisation im Kristallisator im Unterschied zu herkömmlichen Verfahren mit einem Inertgas als Prozessgas. Vorzugsweise wird Stickstoff verwendet. Dabei soll der Sauerstoffgehalt des Gases im zweiten Behandlungsraum weniger als 1 Gew.-%, vorzugsweise weniger als 0,5 Gew.-% und besonders bevorzugt weniger als 0,1 Gew.-% betragen, um eine oxidative Beschädigung des Materials unter den Bedingungen der Kristallisation zu verringern beziehungsweise auszuschliessen.

Da erhitzte Prozessgase teuer sind, wird erfindungsgemäss bevorzugt das im Kristallisator eingesetzte Prozessgas zumindest teilweise in einem Kreislaufsystem geführt, wobei jeweils eine geringe Menge an Austauschgas zu- und weggeführt werden kann. Zwischen der Wegführeinrichtung und Zufuhreinrichtung für das Prozessgas besteht gemäss dieser bevorzugten Ausführungsform ein geschlossener Kreislauf aus Rohrleitungen.

Im Kreislauf können sich weitere Einheiten, wie zum Beispiel Verdichtungseinrichtungen (z. B. Ventilatoren, Gebläse oder Kompressoren), Wärmetauscher (z.B. Erhitzer), Absperrvorrichtungen z.B. ein Ventil oder Hahn) oder Reinigungseinrichtungen (z. B. Filter, Zyklone, Wäscher oder katalytische Verbrennungseinrichtungen), befinden. Da ein Grossteil der Verdichtungsenergie als Wärme in den Gasstrom übergeht, kann die erhöhte Prozessgastemperatur auch mit wenig zusätzlicher Erhitzerleistung aufrecht erhalten werden. Verändert sich jedoch die Eintrittstemperatur der Polykondensatgranulate, so kann dies mittels der zusätzlichen Erhitzerleistung ausgeglichen werden. Bevorzugt sind in dem geschlossenen Kreislaufsystem zusätzliche Einheiten enthalten, ausgewählt aus der Gruppe bestehend aus einem Ventilator, einem Wärmetauscher wie Erhitzer, einer Absperrvorrichtung, einen Kondensator oder einer Kombination dieser Einheiten.

Gemäss einer bevorzugten Ausführungsform ist der Kristallisator, vorzugsweise durch eine Zufuhrleitung, mit einem Inertgastank verbunden. Durch die Zuführleitung kann Inertgas aus dem Inertgastank in das Kreislaufsystem aus Rohrleitungen oder direkt in den Kristallisator eingeführt werden. Vorzugsweise ist in dieser Zuführleitung eine Dosiereinheit, beispielsweise ein Regelventil, angeordnet, mit welcher die Zufuhr von Inertgas kontrolliert werden kann.

Gemäss einer bevorzugten Ausführungsform der vorliegenden Erfindung wird der Druck p2 im zweiten Behandlungsraum so eingestellt, dass er oberhalb des im ersten Behandlungsraum vorliegenden Druckes p1 liegt. Dadurch wird ein Übergehen von Kühlmedium aus dem ersten Behandlungsraum im Trockner in den zweiten Behandlungsraum im Kristallisator verhindert. Aufgrund des höheren Drucks im zweiten Behandlungsraum geht hierbei Inertgas aus dem zweiten Behandlungsraum in den ersten Behandlungsraum über. Es hat sich jedoch gezeigt, dass es gemäss einer erfindungsgemäss bevorzugten Ausführungsform ausreichend ist, wenn p1 < p2 < p1 +100 mbar, vorzugsweise p1 < p2 < p1 +50 mbar gilt, d.h. der Druck im zweiten Behandlungsraum weniger als 100 mbar, vorzugsweise sogar weniger als 50 mbar über dem Druck im ersten Behandlungsraum liegt. Mit anderen Worten genügt überraschend ein leicht höherer Druck im zweiten Behandlungsraum gegenüber dem ersten Behandlungsraum. Bei diesen Druckverhältnissen geht nur ein geringer Anteil an Inertgas durch Übertritt in den ersten Behandlungsraum verloren. Dieser kleine Nachteil wird durch die sich aus der im Kristallisator vorliegenden geringen Feuchtigkeit und den sich daraus ergebenden apparativen und verfahrenstechnischen Vorteilen (geringere Menge an Inertgas im Kristallisator erforderlich, Inertgas muss nur wenig beziehungsweise überhaupt nicht getrocknet werden) mehr als ausgeglichen.

Die Vorrichtung umfasst gemäss einer bevorzugten Ausführungsform Sensoren, mit deren Hilfe der Druck im ersten und zweiten Behandlungsraum bestimmt werden kann. Dabei können herkömmliche Drucksensoren eingesetzt werden. Die Sensoren sind mit einer Steuereinheit verbunden, mit welcher die von den Sensoren ermittelten Daten ausgewertet werden können. Bei der Steuereinheit gemäss dieser Ausführungsform handelt es sich üblicherweise um einen Computer mit erforderlichen Bauteilen wie einer zentralen Rechnereinheit (CPU) und Speicher.

Gemäss einer bevorzugten Ausführungsform ist die Steuereinheit vorzugsweise mit der in der Zuführleitung befindlichen Dosiereinheit verbunden und regelt durch entsprechende Kontrolle der Dosiereinheit die Menge an Prozessgas, welche dem Kreislaufsystem des Kristallisators zugeführt wird. Ermittelt die Steuereinheit beispielsweise aus den von den Sensoren übermittelten Druckwerten einen Druckanstieg im ersten Behandlungsraum, wird durch Öffnen der Dosiereinheit eine derartige Menge an Prozessgas in das Kreislaufsystem geführt, dass sich der gewünschte höhere Druck im zweiten Behandlungsraum einstellt. Analog wird bei einem Druckabfall im ersten Behandlungsraum Prozessgas durch Öffnen einer in einer separaten Ablassleitung befindlichen, ebenfalls mit der Steuereinheit verbundenen und durch diese geregelte Dosiereinheit aus dem Kreislaufsystem abgelassen, um einen zu hohen Druck im zweiten Behandlungsraum mit einhergehendem zu grossem Übergang von Prozessgas vom zweiten in den ersten Behandlungsraum zu vermeiden. Alternativ kann die gewünschte Druckdifferenz zwischen erstem und zweitem Behandlungsraum auch dadurch eingestellt werden, dass durch Öffnen entsprechender Dosiereinrichtungen die Luftzufuhr in den ersten Behandlungsraum beziehungsweise die Luftabfuhr aus dem ersten Behandlungsraum erhöht oder erniedrigt wird.

Ist die zur Einstellung eines gemäss einer erfindungsgemäss bevorzugten Ausführungsform gewünschten Überdrucks im zweiten Behandlungsraum erforderliche Menge an Inertgas bekannt oder ermittelt, kann gemäss dieser bevorzugten Ausführungsform die Vorrichtung auch ohne Steuereinheit durch Einleiten der erforderlichen Menge an Inertgas in den Kristallisator betrieben werden. Es empfiehlt sich aber auch hier zumindest eine Kontrolle der Druckverhältnisse im ersten und zweiten Behandlungsraum mit Hilfe von Drucksensoren.

Gemäss einer weiteren alternativen Ausführungsform ist kein Gasauslass aus dem zweiten Behandlungsraum vorgesehen. In diesem Fall kommt es bei Einleitung von Inertgas in den zweiten Behandlungsraum zwangsläufig zu einem erhöhten Druck im zweiten Behandlungsraum gegenüber dem ersten Behandlungsraum. Dies führt ab einem bestimmten Druckgefälle zu einem Übergang des Inertgases von den zweiten in den ersten Behandlungsraum, wodurch erfindungsgemäss bevorzugt ebenfalls das Eintragen von Wasser in den zweiten Behandlungsraum verhindert wird.

Durch eine bevorzugte Ausführungsform der vorliegenden Erfindung wird ein Energieverlust im Kristallisator durch eine etwaige Verdampfung von Kühlmedium vom Granulat sehr klein gehalten.

Gemäss dieser bevorzugten Ausführungsform der vorliegenden Erfindung kann daher das Granulat mit einer geringeren Menge an Prozessgas effizient auf eine Temperatur erhitzt werden, die einer Temperatur entspricht, die in einer gegebenenfalls anschliessenden Nachbehandlungsstufe anzuwenden ist. Erfindungsgemäss bevorzugt ist daher ein weiteres Erhitzen des Granulats in einer sich an die Kristallisation anschliessende Nachbehandlungsstufe überhaupt nicht oder nur in geringem Mass erforderlich.

Beim Austritt aus dem zweiten Behandlungsraum weist das Granulat vorzugsweise einen Kristallisationsgrad auf, der grösser ist als 35% des maximal bei dieser Kristallisationstemperatur erreichbaren Kristallisationsgrades. Insbesondere bevorzugt weist das Granulat beim Austritt aus dem zweiten Behandlungsraum einen Kristallisationsgrad auf, der zwischen 40% und 70% des maximal bei der Kristallisationstemperatur erreichbaren Kristallisationsgrades liegt. Im Fall von Polyethylenterephthalat (PET) weist das Granulat beim Austritt aus dem zweiten Behandlungsraum einen Kristallisationsgrad zwischen 20% und 50%, insbesondere zwischen 30% und 40% auf.

Gemäss der vorliegenden Erfindung kann das nach der Kristallisation erhaltene Material einer weiteren thermischen Behandlungsstufe zugeführt werden, welche vorzugsweise aus der Gruppe bestehend aus einer Devolatilisierungsstufe, vorzugsweise Dealdehydisierungsstufe, und einer Festphasen-Nachkondensation (SSP) ausgewählt ist. Diese thermische Behandlungsstufe wird in einem dritten Behandlungsraum durchgeführt, welcher sich vorzugsweise in einem separaten Reaktor befindet.

Sowohl die Devolatliisierung, vorzugsweise Dealdehydisierung, als auch die SSP-Reaktion sind dem Fachmann bekannt und müssen an dieser Stelle nicht näher erläutert werden. Erfindungsgemäss bevorzugt wird diese thermische Behandlung in einem dritten Behandlungsraum in einer Gasphase aus Inertgas durchgeführt, wobei flüchtige Komponenten aus dem Polymer während der Behandlung verdampfen und in die Gasphase übergehen. Vorzugsweise wird Stickstoff als Inertgas verwendet. Erfindungsgemäss soll der Sauerstoffgehalt des Gases im dritten Behandlungsraum weniger als 0,1 Gew.-%, vorzugsweise weniger als 0,05 Gew.-% und besonders bevorzugt weniger als 0,02 Gew.-% betragen, um eine oxidative Beschädigung des Materials unter den Bedingungen der Kristallisation zu verringern beziehungsweise auszuschliessen.

Aufgrund der hohen Temperatur des in den dritten Behandlungsraum eintretenden Polymers ist es nicht erforderlich, sehr heisses Prozessgas in den dritten Behandlungsraum einzuleiten. Aufgrund frei werdender Kristallisationswärme wird erfindungsgemäss im dritten Behandlungsraum im Fall von Polyethylenterephthalat (PET) in der Regel ein Temperaturanstieg von 3 bis 15 °C, vorzugsweise von 5 bis 15°C und besonders bevorzugt von 7 bis 15°C beobachtet. Gemäss der vorliegenden Erfindung kann daher in bestimmten Fällen in den dritten Behandlungsraum ein Prozessgas eingeleitet werden, dessen Temperatur unterhalb der Temperatur der im dritten Behandlungsraum vorliegenden Polymerteilchen liegt. Durch die vorliegende Erfindung kann eine sich anschliessende thermische Behandlungsstufe daher energieeffizient durchgeführt werden.

Im dritten Behandlungsraum wird das Prozessgas vorzugsweise im Gegenstrom zum Strom der Polymerpartikel geführt. Es können prinzipiell die gleichen Reaktoren in der thermischen Behandlung eingesetzt werden, welche vorstehend für die Kristallisation beschrieben wurden, oder andere hierfür herkömmlich eingesetzte Reaktoren. Beispielsweise sei ein herkömmlicher Schachtreaktor erwähnt.

Die kristallisierten Polymerteilchen werden aus dem Kristallisator auf bekannte Art in den dritten Behandlungsraum überführt. Beispielsweise können die Teilchen den Kristallisator mittels einer pneumatischen Förderung in den dritten Behandlungsraum überführt werden. Hierbei kann je nach Geschwindigkeit der Förderung im Fall von Polyethylenterephthalat (PET) eine Abkühlung der Polymerpartikel um zwischen 2 und 15°C, vorzugsweise zwischen 3 und 15°C und besonders bevorzugt zwischen 5 und 15°C erfolgen. Falls erforderlich kann ein zusätzliches Erhitzen der Teilchen vor Eintritt in den dritten Behandlungsraum auf bekannte Art durchgeführt werden.

Erfindungsgemäss kann die Dealdehydisierung von beispielsweise Polyethylenterephthalat im dritten Behandlungsraum bei einer Temperatur von 140 bis 200°C erfolgen. Es ist hierbei beispielsweise ein Temperaturanstieg im dritten Behandlungsraum von 3 bis 15°C zu beobachten.

Erfindungsgemäss kann die SSP-Reaktion von beispielsweise Polyethylenterephthalat im dritten Behandlungsraum bei einer Temperatur von 180 bis 240°C, vorzugsweise 180 bis 225°C erfolgen. Es ist hierbei beispielsweise ein Temperaturanstieg im dritten Behandlungsraum von 3 bis 15°C zu beobachten.

Die vorliegende Erfindung wird nachstehend anhand einer nicht einschränkenden Zeichnung näher erläutert. Es zeigt:

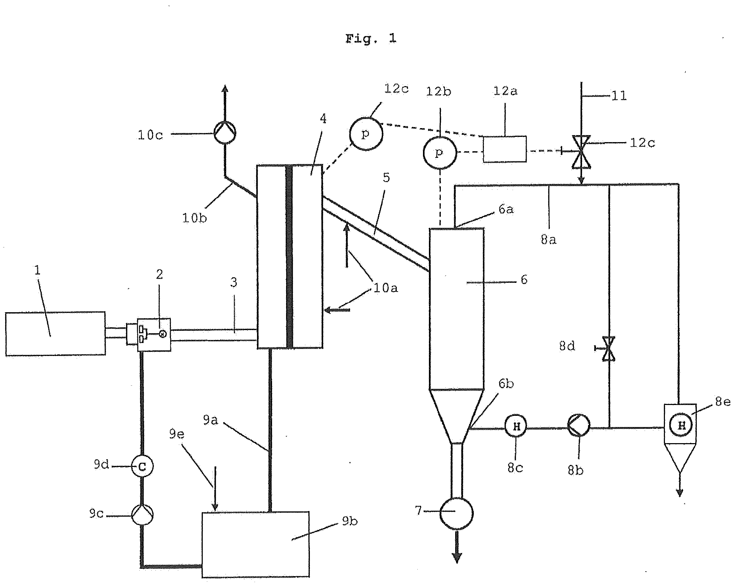

Fig. 1    eine schematische Darstellung einer bevorzugten Ausführungsform einer Vorrichtung zur Durchführung der vorliegenden Erfindung.

Die Vorrichtung gemäss Fig. 1 weist einen Reaktor 1 zur Herstellung einer Polymerschmelze auf. Es kann sich hierbei um einen Reaktor handeln, in welchem eine Schmelzpolymerisation durchgeführt und somit ein Prepolymer aus den Monomeren hergestellt wird. Wahlweise kann es sich bei dem Reaktor 1 auch um eine Vorrichtung zum Aufschmelzen eines festen Produkts, beispielsweise eines Prepolymer handeln. Beispielhaft kann der Reaktor 1 in diesem Fall ein Extruder sein.

Das geschmolzene Material wird in eine Granulationsvorrichtung 2 überführt. In der Granulationsvorrichtung 2 wird auf bekannte Weise ein Granulat aus dem geschmolzenen Material hergestellt. Beispielsweise kann es sich um einen Unterwassergranulator (wie in Fig. 1 gezeigt) oder um einen Unterwasserstranggranulator handeln. Die Granulierung erfolgt in diesem Fall unter Wasser. Die erhaltenen Granulatpartikel werden im Granulator 2 gleichzeitig abgekühlt. Wie vorstehend ausgeführt darf die Abkühlung aber nicht so stark ausfallen, dass die Granulatpartikel unterhalb ihres Kristallisationstemperaturbereiches abgekühlt werden. Dies kann durch den Einsatz von erwärmtem Wasser, welches eine Temperatur über 50°C, aber zumindest 10°C unterhalb seines druckabhängigen Siedepunktes, insbesondere eine Temperatur unterhalb des Tg des Polykondensates, vorzugsweise eine Temperatur von 60 bis 80°C aufweist, erreicht werden. Das Granulat sollte im Fall von Polyethylenterephthalat (PET) auf eine Temperatur von 110 bis 180°C, vorzugsweise 115 to 160°C und besonders bevorzugt 120 bis 150°C, gekühlt werden.

Das Granulat wird über eine Verbindungsleitung 3 direkt in die Einheit zum Trocknen des Granulats (Trocknungsvorrichtung) 4 überführt. Zur Vermeidung einer zu starken Abkühlung des Granulats sollte dieses so schnell wie möglich aus dem Granulator 2 und durch die Verbindungsleitung 3 geführt werden. Vorzugsweise kann die Fliessgeschwindigkeit in der Verbindungsleitung 3 durch Einleitung eines Gasstroms (vorzugsweise Luft) erhöht werden.

In der Einheit zum Trocknen des Granulats (Trocknungsvorrichtung) 4 wird das Granulat vom flüssigen Kühlmedium (Wasser) abgetrennt und getrocknet. Das abgetrennte Kühlmedium wird über eine Rohrleitung 9a zurück in den Vorratsbehälter (Tank) 9b für das Kühlmedium geführt. Der Vorratsbehälter 9b weist einen Einlass 9e zur Zuführung von Kühlmedium auf. Vom Vorratsbehälter 9b wird das Kühlmedium mit Hilfe einer Umwälzvorrichtung (Pumpe) 9c in die Granulationsvorrichtung 2 überführt. Hierbei durchläuft das Kühlmedium vorzugsweise einen Wärmetauscher 9d. Im Wärmetauscher 9d kann das Kühlmedium nach Bedarf erwärmt oder abgekühlt werden. Insbesondere aus der Trocknungsvorrichtung 4 zurückgeführtes Kühlmedium kann aufgrund des Kontakts mit heissem Granulat eine zu hohe Temperatur aufweisen und muss vor dem Eintritt in die Granulationsvorrichtung 2 gekühlt werden.

Das frische Kühlmedium, das über den Einlass 9e zugeführt wird, kann ein basisches Medium oder ein pH-Puffermedium enthalten. Insbesondere ist hier die Verwendung von Wasser mit einer in einem engen Bereich eingestellten Neutralisations- oder Pufferwirkung vorgesehen. Alternativ kann die Zugabe eines basischen Mediums oder eines pH-Puffermediums auch direkt in den Kühlkreislauf, z.B. in den Vorratstank 9b, erfolgen.

Die Trocknung des Granulats im ersten Behandlungsraum in der Einheit 4 erfolgt neben einer mechanischen Trocknungsvorrichtung mit Hilfe von Luft oder einer im wesentlichen Luft umfassenden Gasatmosphäre bei einer Temperatur von 100 bis 200°C, vorzugsweise 120 bis 160°C. In der Vorrichtung gemäss Fig. 1 wird die Luft durch einen Lufteinlass 10a in die Trocknungsvorrichtung 4 geführt. Der Lufteinlass 10a kann sich im Gehäuse der Trocknungsvorrichtung 4 oder in der Verbindungsleitung 5 oder an beiden Orten befinden. Optional kann in der Lufteinlassleitung 10a ein (nicht gezeigter) Ansaugfilter angeordnet sein. Die Luft verlässt die Trocknungsvorrichtung 4 durch den Luftauslass 10b. In der Vorrichtung gemäss Fig. 1 ist in der Luftauslassleitung 10b ein Ventilator 10c zur Zirkulation der Luft durch die Trocknungsvorrichtung 4 angeordnet. Der Ventilator könnte jedoch alternativ auch in der Lufteinlassleitung 10a angeordnet sein. Weiterhin könnten Lufteinlass 10a und Luftauslass 10b miteinander unter Bildung eines Kreislaufsystems verbunden sein. In diesem Kreislaufsystem ist dann ein Kondensator bereitzustellen.

Das Granulat wird aus dem Trockner 4 über eine Verbindungsleitung 5 direkt in einen Kristallisator 6 überführt. Zur Vermeidung des Anhaftens und der Agglomeration von Granulatpartikeln ist die Verbindungsleitung 5 ohne Absperreinheiten ausgestaltet. Das Granulat kann ungehindert vom Trockner 4 in den Kristallisator 6 übergehen.

Im Kristallisator 6 wird das im Wesentlichen amorphe Granulat zumindest teilkristallisiert. Innerhalb des Kristallisators 6 werden die Granulatpartikel durch einen durch den Kristallisator 6 geleiteten Gasstrom in Bewegung gehalten. Innerhalb des Kristallisators 6 liegen die Bedingungen eines Wirbelbetts vor. Zusätzlich könnte im Kristallisator 6 auch eine Vorrichtung zur mechanischen Bewegung der Partikel bereitgestellt werden.

Die Kristallisation der Partikel erfolgt durch Energiezufuhr von aussen, wobei zur Energiezufuhr von aussen ein Prozessgas im Gegenstrom zum Granulatstrom durch den zweiten Behandlungsraum geführt wird, welches eine Temperatur $T_{Gas}$ aufweist, die grösser ist als die Summe der Granulattemperatur $T_{GR}$ und der durch freigesetzte Kristallisationswärme im zweiten Behandlungsraum auftretenden Temperaturerhöhung $T_{KR}$, d.h. $T_{Gas} > (T_{GR} + T_{KR})$. Im Fall von Polyethylenterephthalat (PET) erfolgt die Kristallisation bei einer Temperatur von 140 bis 220°C, wobei bei Temperaturen über 180°C bevorzugt eine Inertgas, im wesentlichen Stickstoff, als Prozessgas verwendet wird. Das kristallisierte Granulat verlässt den Kristallisator über eine Austragsvorrichtung 7, beispielsweise einer Absperreinheit wie einer Zellradschleuse. Diese Zellradschleuse ist mit einem Gehäuse und einem darin beweglich angeordneten Rotor ausgestattet, welche einen Spalt zwischen dem Rotor und dem Gehäuse aufweist, welcher grösser ist als der mittlere Granulatdurchmesser.

Alternativ kann stromabwärts von der Zellradschleuse eine zweite Schleuseneinheit (wie eine Zellradschleuse) mit einem Gehäuse und einem darin beweglich angeordneten Rotor angeordnet sein, welche einen Spalt zwischen dem Rotor und dem Gehäuse aufweist, welcher kleiner ist als der mittlere Granulatdurchmesser.

Die Partikel können einer anschliessenden thermischen Behandlung wie einer Dealdehydisierung oder SSP-Reaktion zugeführt werden. Wahlweise können die Partikel auch einer Kühlstufe zugeführt werden.

Das im Kristallisator 6 verwendete Prozessgas wird durch ein geschlossenes Kreislaufsystem aus Rohrleitungen 8a geführt. Das Prozessgas tritt in den Kristallisator 6 durch einen Einlass 6a ein und verlässt den Kristallisator 6 durch den Auslass 6b. Im Kreislaufsystem des Prozessgases befindet sich ein Ventilator 8b zur Zirkulation des Gases. Vor dem Einlass 6a ist ein Wärmetauscher 8c bereitgestellt, um das Gas vor dem Eintritt in den Kristallisator 6 auf die gewünschte Temperatur zu bringen. Vorzugsweise wird das Gas im Wärmetauscher 8c erhitzt.

Im Kreislaufsystem gemäss Fig. 1 ist weiterhin eine Absperrvorrichtung 8d (beispielsweise ein Ventil) vorgesehen, um einen Teil des Gases in einen sekundären Kreislauf zu führen.

Weiterhin ist im Kreislaufsystem gemäss Fig. 1 ein Kondensator 8e angeordnet, um Kühlmedium aus dem Gas zu entfernen, welches vom Gas während des Durchgangs durch den Kristallisator 6 aufgenommen wurde. Da erfindungsgemäss wenig Kühlmedium in den Kristallisator 6 übergeht, kann der Kondensator 8e vergleichsweise klein dimensioniert sein.

Die Vorrichtung gemäss Fig. 1 weist eine Zuführleitung 11 für frisches Prozessgas auf, über welche Prozessgas in das vorstehend beschriebene Kreislaufsystem eingespeist oder aus dem Kreislaufsystem abgelassen werden kann.

Die vorliegende Vorrichtung kann vorteilhaft zur kontinuierlichen Granulation und Kristallisation eines Polymers, insbesondere eines Polykondensats, vorzugsweise eines Polyesters wie Polyethylenterephthalat verwendet werden.

**Patentansprüche**

1. Verfahren zur kontinuierlichen Herstellung eines teilkristallinen Polykondensatgranulats, umfassend die Schritte:

   a) Formen einer Polykondensatschmelze zu Granulat unter Zugabe eines flüssigen Kühlmediums, welches eine Temperatur unterhalb des Glasübergangspunkts (Tg) des Polykondensats aufweist, und Abkühlen auf eine mittlere Granulat-Temperatur innerhalb des Kristallisationstemperaturbereiches des Polykondensates, wobei das Abkühlen vor oder während oder nach dem Formen zu Granulat erfolgt;
   b) Abtrennen des flüssigen Kühlmediums vom Granulat in einem ersten Behandlungsraum, wobei das Granulat nach Austritt aus dem ersten Behandlungsraum eine Temperatur $T_{GR}$ aufweist;
   c) Kristallisieren des Granulats in einem zweiten Behandlungsraum,

   **dadurch gekennzeichnet, dass**
   im zweiten Behandlungsraum Bedingungen eines Wirbelbetts vorliegen und das Granulat im zweiten Behandlungsraum durch Energiezufuhr von aussen mittels eines Prozessgases erhitzt wird, wobei das Prozessgas eine Temperatur $T_{Gas}$ aufweist, die grösser ist als die Summe der Granulattemperatur $T_{GR}$ und der durch freigesetzte Kristallisationswärme im zweiten Behandlungsraum auftretenden Temperaturerhöhung $T_{KR}$, d.h. $T_{Gas} > (T_{GR} + T_{KR})$, und wobei das Granulat am Austritt aus dem zweiten Behandlungsraum eine mittlere Temperatur $T_{PH}$ aufweist, die um 5 bis 70°C grösser ist als die Summe der Granulattemperatur $T_{GR}$ und der durch freigesetzte Kristallisationswärme im zweiten Behandlungsraum auftretenden Temperaturerhöhung $T_{KR}$, d.h. $(T_{GR} + T_{KR} + 70°C) \geq T_{PH} \geq (T_{GR} + T_{KR} + 5°C)$.

2. Verfahren nach Anspruch 1, **dadurch gekennzeichnet, dass** das Polykondensat ausgewählt ist aus der Gruppe bestehend aus Polyestern und Polyamiden.

3. Verfahren nach Anspruch 2, **dadurch gekennzeichnet, dass** das Polykondensat ein Polyethylenterephthalat-Homopolymer oder - Copolymer ist.

4. Verfahren nach Anspruch 3, wobei die Trocknung des Granulats im ersten Behandlungsraum erfolgt und das Granulat nach Austritt aus dem ersten Behandlungsraum eine Temperatur $T_{GR}$ im Bereich von 100 bis 180°C, vorzugsweise von 120 °C bis 160°C aufweist.

5. Verfahren nach einem der Ansprüche 1 bis 4, **dadurch gekennzeichnet, dass** das Kühlmedium Wasser ist.

6. Verfahren nach Anspruch 5, **dadurch gekenn-**

**zeichnet, dass** das Wasser eine Temperatur im Bereich von 50°C bis 80°C, bevorzugt im Bereich von 60°C bis 75°C aufweist.

7. Verfahren nach einem der Ansprüche 1 bis 6, **dadurch gekennzeichnet, dass** das Verhältnis X der Massenströme von Gas ($m_G$) und Granulat ($m_P$) (X = $m_G/m_P$) im zweiten Behandlungsraum so eingestellt wird, dass $1 \leq (T_{Gas} - T_{KR} - T_{GR}) * X \leq 80$, vorzugsweise $2 < (T_{Gas} - T_{KR} - T_{GR}) * X \leq 80$, besonders bevorzugt $4 < (T_{Gas} - T_{KR} - T_{GR}) * X \leq 80$ ist.

8. Verfahren nach einem der Ansprüche 1 bis 7, **dadurch gekennzeichnet, dass** die Verweilzeit des Granulats im zweiten Behandlungsraum im Bereich von 1 bis 15 Minuten, bevorzugt 1 bis 8 Minuten liegt.

**Claims**

1. Method for continuous production of partially crystalline polycondensate granules, comprising the steps:

   a) moulding a polycondensate melt into granules with addition of a liquid cooling medium which has a temperature below the glass transition point (Tg) of the polycondensate, and cooling to an average granule temperature within the crystallisation temperature range of the polycondensate, wherein the cooling takes place before or during or after the moulding into granules,
   b) separating the liquid cooling medium from the granules in a first treatment space, wherein the granules after emergence from the first treatment space have a temperature $T_{GR}$, and
   c) crystallising the granules in a second treatment space,

   **characterized in that**
   in the second treatment space conditions of a fluidized bed are present and the granules in the second treatment space are heated by energy input from outside by means of a process gas, wherein the process gas has a temperature $T_{Gas}$ which is greater than the sum of the granule temperature $T_{GR}$ and the temperature increase $T_{KR}$ arising due to heat of crystallization released in the second treatment space, i.e. $T_{Gas} > (T_{GR} + T_{KR})$, and wherein the granules at the exit from the second treatment space have an average temperature $T_{PH}$ which is greater by 5 to 70°C than the sum of the granule temperature $T_{GR}$ and the temperature increase $T_{KR}$ arising due to heat of crystallization released in the second treatment space, i.e. $(T_{GR} + T_{KR} + 70°C) \geq T_{PH} \geq (T_{GR} + T_{KR} + 5°C)$.

2. Method according to Claim 1, **characterized in that** the polycondensate is selected from the group consisting of polyesters and polyamides.

3. Method according to Claim 2, **characterized in that** the polycondensate is a polyethylene terephthalate homopolymer or copolymer.

4. Method according to Claim 3, wherein the drying of the granules takes place in the first treatment space and the granules after emergence from the first treatment space have a temperature $T_{GR}$ in the range from 100 to 180°C, preferably from 120 °C to 160°C.

5. Method according to one of Claims 1 to 4, **characterized in that** the cooling medium is water.

6. Method according to Claim 5, **characterized in that** the water has a temperature in the range from 50°C to 80°C, preferably in the range from 60°C to 75°C.

7. Method according to one of Claims 1 to 6, **characterized in that** the ratio X of the mass flows of gas ($m_G$) and granules ($m_P$) (X = $m_G/m_P$) in the second treatment space is adjusted such that $1 \leq (T_{Gas} - T_{KR} - T_{GR}) * X \leq 80$, preferably $2 < (T_{Gas} - T_{KR} - T_{GR}) * X \leq 80$, especially preferably $4 < (T_{Gas} - T_{KR} - T_{GR}) * X \leq 80$.

8. Method according to one of Claims 1 to 7, **characterized in that** the residence time of the granules in the second treatment space lies in the range from 1 to 15 minutes, preferably 1 to 8 minutes.

**Revendications**

1. Méthode de production en continu de granulés de polycondensat partiellement cristallins, comprenant les étapes suivantes :

   a) moulage d'un polycondensat fondu en granulés avec ajout d'un agent de refroidissement liquide dont la température est inférieure au point de transition vitreuse (Tg) du polycondensat, et refroidissement jusqu'à une température moyenne des granulés comprise dans la plage de température de cristallisation du polycondensat, le refroidissement ayant lieu avant, pendant ou après le moulage en granulés,
   b) séparer l'agent de refroidissement liquide des granulés dans un premier espace de traitement, les granulés sortant du premier espace de traitement ayant une température $T_{GR}$, et
   c) cristallisation des granulés dans un deuxième espace de traitement,

   **caractérisé par le fait que**
   dans le deuxième espace de traitement, les conditions d'un lit fluidisé sont présentes et les granulés dans le deuxième espace de traitement sont chauffés par un apport d'énergie provenant de l'extérieur au moyen d'un gaz de traitement, dans lequel le gaz de traitement a une température $T_{Gas}$ qui est supérieure à la somme de la température des granulés $T_{GR}$ et de l'augmentation de température $T_{KR}$ due à la chaleur de cristallisation libérée dans le deuxième espace de traitement, c'est-à-dire $T_{Gas} > (T_{GR} + T_{KR})$, et dans lequel les granulés à la sortie du deuxième espace de traitement ont une température moyenne $T_{PH}$ supérieure de 5 à 70°C à la somme de la température des granulés $T_{GR}$ et de l'augmentation de température $T_{KR}$ due à la chaleur de cristallisation dégagée dans le deuxième espace de traitement, c'est-à-dire $(T_{GR} + T_{KR} + 70°C) \geq T_{PH} \geq (T_{GR} + T_{KR} + 5°C)$.

2. Méthode selon la revendication 1, **caractérisé par le fait que** le polycondensat est choisi dans le groupe constitué par les polyesters et les polyamides.

3. Méthode selon la revendication 2, **caractérisé par le fait que** le polycondensat est un homopolymère ou un copolymère de polyéthylène téréphtalate.

4. Méthode selon la revendication 3, dans lequel le séchage des granulés a lieu dans le premier espace de traitement et les granulés, après leur sortie du premier espace de traitement, ont une température $T_{GR}$ comprise entre 100 et 180°C, de préférence entre 120 et 160°C.

5. Méthode selon l'une des revendications 1 à 4, **caractérisé par le fait que** l'agent de refroidissement est de l'eau.

6. Méthode selon la revendication 5, **caractérisé par le fait que** l'eau a une température comprise entre 50°C et 80°C, de préférence entre 60°C et 75°C.

7. Méthode selon l'une des revendications 1 à 6, **caractérisé en ce que** le rapport X des débits massiques de gaz ($m_G$) et de granulés ($m_P$) ($X = m_G / m_P$) dans le second espace de traitement est ajusté de telle sorte que $1 \leq (T_{Gas} - T_{KR} - T_{GR}) * X \leq 80$, de préférence $2 < (T_{Gas} - T_{KR} - T_{GR}) * X \leq 80$, en particulier $4 < (T_{Gas} - T_{KR} - T_{GR}) * X \leq 80$.

8. Méthode selon l'une des revendications 1 à 7, **caractérisé par le fait que** le temps de séjour des granulés dans le deuxième espace de traitement est compris entre 1 et 15 minutes, de préférence entre 1 et 8 minutes.

Fig. 1

EP 3 363 841 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10349016
- DE 102004015515
- US 3544525 A
- WO 2008071023 A
- EP 0541674 A
- WO 2008071278 A

**In der Beschreibung aufgeführte Nicht-Patentliteratur**

- Modern Polyesters. Wiley, 2003, 143
- Modern Polyesters. Wiley, 2003, 158-164